# EUROPÄISCHE PATENTSCHRIFT

(11) **EP 3 162 426 B1**
(45) Veröffentlichungstag und Bekanntmachung des Hinweises auf die Patenterteilung: **23.10.2019**
(21) Anmeldenummer: 15192154.1
(22) Anmeldetag: 29.10.2015
(51) Int. Cl.: B01D 53/14, C07C 29/78

(54) **VERFAHREN UND TANKANORDNUNG ZUR REDUZIERUNG DER EMISSION VON METHANOL**
METHOD AND RESERVOIR ARRANGMENT FOR REDUCING THE EMISSION OF METHANOL
PROCÉDÉ ET AGENCEMENT DE RÉSERVOIR POUR LA RÉDUCTION DES ÉMISSIONS DE MÉTHANOL

(43) Veröffentlichungstag der Anmeldung: 03.05.2017
(73) Patentinhaber: GasConTec GmbH, 61348 Bad Homburg v. d. Höhe (DE)
(72) Erfinder: Wagner, Ulrich, 06406 Bernburg (DE); Balthasar, Wolff, 40833 Ratingen (DE); Müller, Dierk, 61184 Karben (DE)
(74) Vertreter: Patentanwälte Bauer Vorberg Kayser

(56) Entgegenhaltungen:
- DE-A1- 2 840 440
- US-A- 3 950 369
- US-A- 4 181 675
- US-A- 4 650 814
- US-A- 5 346 593
- US-A1- 2006 223 892

## Beschreibung

Die Erfindung betrifft ein Verfahren zur Reduzierung der Emission von Methanol mit den Merkmalen des Oberbegriffs von Anspruch 1 sowie eine Tankanordnung für Methanol mit den Merkmalen des Oberbegriffs von Anspruch 14.

Bei der Herstellung, dem Transport oder der Lagerung von flüchtigen organischen Produkten - wie vorliegend Methanol - kann es zu gasförmigen Emissionen des Produkts aus einem jeweiligen Tank kommen. Dies ist einerseits durch Temperaturschwankungen bedingt, wie sie beispielsweise durch den Tag-Nacht-Rhythmus entstehen, und andererseits etwa durch Umpumpvorgänge. Die resultierenden Volumenveränderungen des Produkts in dem Tank führen dann zu der Abgabe von Atmungsabgasen mit dem verdunsteten Produkt.

Solche mit Methanol belasteten Atmungsabgase dürfen aber nicht unbehandelt in die Atmosphäre abgegeben werden. Einerseits kann Methanol mit Sauerstoff eine explosive Mischung bilden. Andererseits verursacht das Methanol auch fotochemischen Smog. Um den Methanolanteil im Atmungsabgas auf ein akzeptables Maß zu reduzieren, wird das Atmungsabgas einer Wasserwäsche zum Auswaschen des Methanols unterzogen.

Nachteilig bei einer solchen Wasserwäsche ist, dass große Mengen an Wasser erforderlich sind, um den erforderlichen Reinigungsgrad bei der Verringerung des Emissionsanteils in dem Atmungsabgas zu erreichen. Diese Menge an für die Wasserwäsche verwendetem Wasser ist dann ebenfalls mit den Emissionen belastet. Zwar sind etwa bei Anlagen zur Herstellung von Methanol regelmäßig Vorrichtungen, z. B. Destillationsstufen, vorhanden, in denen das belastete Wasser dann auch von diesen Methanolresten gereinigt und das dabei gewonnene Methanol wieder verwertet werden kann, doch kann die Menge des so zu reinigenden Wassers die Destillationsstufe über Gebühr belasten. Speziell kann das dazu führen, dass diese deutlich größer dimensioniert bzw. deutlich energieaufwendiger betrieben werden muss gegenüber dem Fall ohne Notwendigkeit der Reinigung einer solchen Wassermenge.

Die amerikanische Patentschrift US 5,346,593 beschreibt eine Kolonne zur Raffination von Methanol und ein Verfahren, bei dem ein Zwischenverdampfer verwendet um die Energieanforderungen bei der Methanolherstellung zu minimieren. Methanol und leichtere Dampfbestandteile aus einer Destillationskolonne werden einem mehrteiligen Kondensatorbereich zugeführt um Flüssigkeit zum Rückfluss in die Kolonne zu gewinnen.

Die amerikanische Patentschrift US 4,181,675 beschreibt ein Verfahren zur Synthese von Methanol bei dem ein Purgegasstrom entfernt wird während das verbliebene reagierte Gas zu dem Synthesekatalysator zurückgeführt wird. Das Abtrennen des Purgegases erfolgt durch das Kontaktieren der äußeren Oberflächen einer Vielzahl von hohlen Fasermembranen. Vor diesem Kontaktieren wird Methanoldampf durch eine Wasserwäsche aus dem Purgegas wiedergewonnen.

Vor diesem Hintergrund besteht die Aufgabe der Erfindung darin, das aus dem Stand der Technik bekannte Verfahren zur Reduzierung der Emission von Methanol und die aus dem Stand der Technik bekannte Tankanordnung für Methanol so weiterzuentwickeln und zu verbessern, dass es insgesamt wirtschaftlicher wird.

Diese Aufgabe wird bei dem Verfahren zur Reduzierung der Emission von Methanol mit den Merkmalen des Oberbegriffs von Anspruch 1 durch die Merkmale des kennzeichnenden Teils von Anspruch 1 gelöst. Bei der Tankanordnung für Methanol mit den Merkmalen des Oberbegriffs von Anspruch 14 wird die Aufgabe durch die Merkmale des kennzeichnenden Teils von Anspruch 14 gelöst.

Wesentlich für die Erfindung ist die Erkenntnis, dass die für eine Wasserwäsche des Atmungsabgases erforderliche Menge an Wasser dadurch bedeutend verringert werden kann, dass in der entsprechenden Reinigungsanordnung eine Kühlung erfolgt. Erfindungsgemäß ist erkannt worden, dass eine solche Kühlung einerseits zumindest zu einer teilweisen Kondensation - und damit Abscheidung - des zu verringernden Emissionsanteils führt und folglich bereits durch diesen Mechanismus die Belastung des Wassers mit dem Methanol reduziert wird. Andererseits ist erkannt worden, dass jedenfalls im Falle einer negativen Lösungsenthalpie, welche bei der Auflösung von Methanol im Wasser vorliegt, die erfindungsgemäße Kühlung, welche dann jedenfalls indirekt auch das Wasser bei der Wasserwäsche betrifft, die Löslichkeit des Methanols im Wasser erhöht. Durch die Kombination dieser beiden Effekte ist für die Wasserwäsche eine deutlich geringere Menge an Wasser erforderlich, wodurch der Destillationsaufwand auch bedeutend sinkt.

Vorschlagsgemäß ist eine Beschleierung des Methanols in dem Produkttank mit einem Schutzgas - z. B. Stickstoff - vorgesehen. Entsprechend weist das Atmungsabgas einen Anteil an diesem Schutzgas auf. Die Verwendung eines inerten Schutzgases zur Beschleierung des Methanols in dem Tank bietet eine Reihe von Vorteilen. Erstens wird speziell bei diesem entzündlichen Stoff durch die Beschleierung das Erreichen der Sauerstoffgrenzkonzentration (SGK) in den Atmungsabgasen bzw. in der Umgebungsluft verhindert. Zweitens kann eine Verminderung der Qualität des Methanols durch Aufnahme von Wasser aus der Umgebungsluft vermieden werden. Das Risiko einer solchen Wasseraufnahme besteht insbesondere durch die hygroskopischen Eigenschaften von Methanol. Neben dieser ungewünschten Wirkung auf das Methanol selbst kann auf diese Weise aufgenommenes Wasser auch zur Korrosion von Gefäßen, Tanks und Leitungen der Anlage führen. Allerdings verringert die Verwendung eines Schutzgases zur Beschleierung nicht die Notwendigkeit der Reinigung des Atmungsabgases von den Emissionen des Methanols.

Insbesondere Stickstoff weist gute Eigenschaften zur Inertheit auf und ist ökologisch unbedenklich, weswegen es sich besonders als Schutzgas eignet. Wenn beispielsweise bei der Herstellung des Methanols Sauerstoff aus der Umgebungsluft gewonnen wird, fällt bei diesem Vorgang Stickstoff als Nebenprodukt an und steht somit ohne weiteres zur Verfügung, was Gegenstand des Unteranspruchs 3 ist.

Die bevorzugte Ausgestaltung des Unteranspruchs 4 sieht dabei eine Kühlung speziell des Atmungsabgases vor. Diese Kühlung kann - etwa gegenüber den für Kältefallen üblicherweise erforderlichen, sehr niedrigen Temperaturen - durchaus moderat ausfallen und dennoch eine merkliche Verringerung der erforderlichen Wassermenge erzielen.

Gemäß den bevorzugten Ausgestaltungen der Unteransprüche 5 bis 8 sowie 15 ist eine zweistufige Reinigung vorgesehen, welche sich in eine Kondensation und eine nachgelagerte Wasserwäsche im engeren Sinne aufteilt. Dabei wird zwecks möglichst weitgehender Kondensation des Methanols vor der Wasserwäsche das Atmungsabgas gekühlt, bevor es der Wasserwäsche zugeführt wird. Auf diese Weise kann der kondensierte Emissionsanteil unmittelbar in den Produkttank zurückgeführt werden. Durch Vorgabe der Kühltemperatur kann der Anteil der nach der Kondensation verbliebenen Emission eingegrenzt werden, was wiederum eine Begrenzung der für die Wasserwäsche erforderlichen Wassermenge erlaubt.

Die vorschlagsgemäße Kühlung ist dann besonders günstig, wenn - wie es dem bevorzugten Unteranspruch 9 entspricht - die entsprechende Kühlleistung bei einer Luftzerlegung zum Gewinnen von Sauerstoff anfällt. Speziell zur Herstellung von Methanol ist eine solche Luftzerlegung häufig gegeben.

Wie der Unteranspruch 10 beschreibt, ist das vorschlagsgemäße Verfahren bei der katalytischen Herstellung von Methanol, bei welchem ein Synthesegas als Zwischenschritt erzeugt wird, besonders interessant, da hier eine Luftzerlegung vorgesehen ist, welche sowohl die Kühlleistung als auch Stickstoff als Schutzgas liefern kann.

Die bevorzugte Ausgestaltung des Unteranspruchs 11 betrifft dann für Erdgas als Ausgangsstoff die bevorzugte Variante zur Herstellung des Synthesegases mit einem Autothermreformer.

Der Unteranspruch 12 sieht vor, dass bei der Herstellung von Methanol eine Destillation vorgesehen ist, in der das nunmehr in kleinerer Menge anfallende, mit der Emission belastete Wasser aus der Wasserwäsche wieder behandelt werden kann.

Schließlich betrifft die bevorzugte Ausgestaltung des Unteranspruchs 13 das Verfahren bei einer Anlage, in der die Herstellung des Methanols lediglich einen Zwischenschritt bei der Herstellung eines wasserhaltigen Kohlenwasserstoffgemisches ist. Dieses wird durch Umwandlung eines Dimethylether/Methanol/WasserGemisches gewonnen, welches seinerseits aus einer Umwandlung des Methanols erzeugt wurde.

Weitere vorteilhafte und bevorzugte Ausgestaltungen ergeben sich aus der nachfolgenden Beschreibung mit Bezug auf die Figuren. In der lediglich Ausführungsbeispiele wiedergebenden Zeichnung zeigt
- Fig. 1: eine schematische Darstellung einer Anlage mit einer Tankanordnung gemäß einem ersten Ausführungsbeispiel für die Herstellung von Methanol aus Erdgas und zur Ausführung des vorschlagsgemäßen Verfahrens,
- Fig. 2: eine Darstellung des im Atmungsabgas verbliebenen Methanols in Abhängigkeit von der Kühltemperatur bei einer beispielhaften Ausführung des vorschlagsgemäßen Verfahrens in einer Anlage gemäß Fig. 1 und
- Fig. 3: eine schematische Darstellung einer Anlage mit einer Tankanordnung gemäß einem zweiten Ausführungsbeispiel für die Herstellung von Methanol aus Erdöl und zur Ausführung des vorschlagsgemäßen Verfahrens.

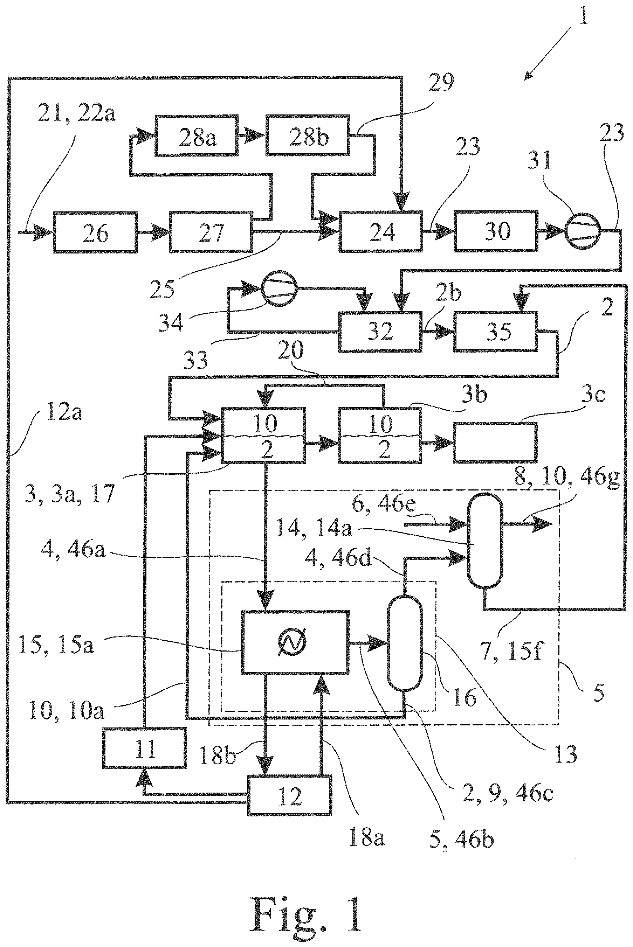

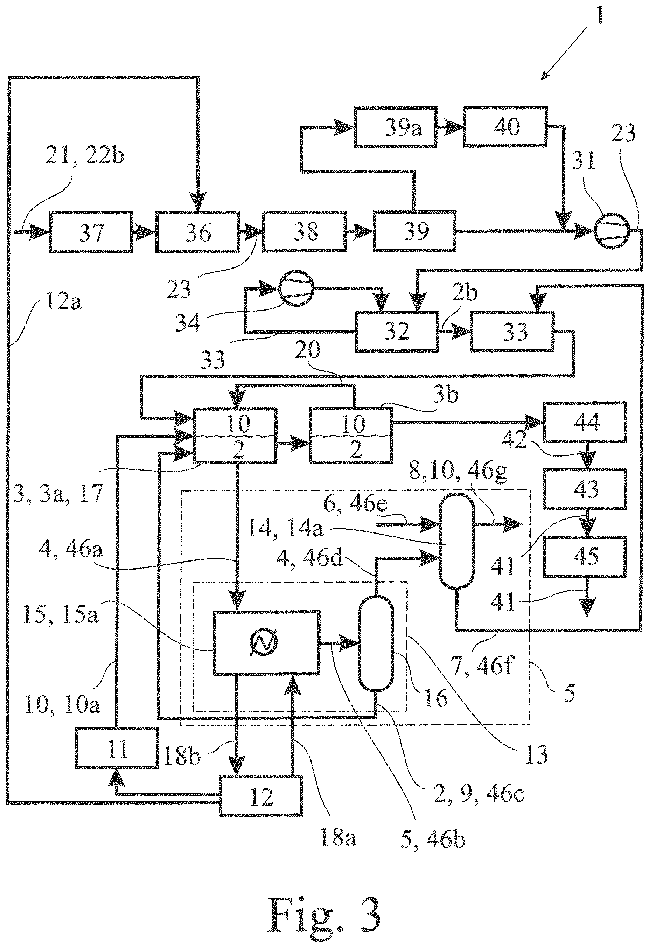

Das vorschlagsgemäße Verfahren dient zur Reduzierung der Emission von Methanol, wobei das Methanol 2 von einem Produkttank 3 aufgenommen wird. Gemäß den beiden bevorzugten Ausführungsbeispielen der Fig. 1 und der Fig. 3 wird das Methanol 2 in einer jeweiligen Anlage 1 zur Herstellung von Methanol 2 hergestellt und in dem Produkttank 3 gelagert, wobei die jeweilige Darstellung in der Fig. 1 und der Fig. 3 beispielhaft und schematisch ist. Die Funktionsweise der jeweiligen Anlage 1 wird untenstehend genauer erläutert. Bei dem Produkttank 3 kann es sich im Prinzip um ein beliebiges Behältnis handeln, in welchem das Methanol 2 zumindest zwischengelagert wird.

Gemäß dem vorschlagsgemäßen Verfahren ist weiter vorgesehen, dass aus dem Produkttank 3 ein Atmungsabgas 4 mit einer gasförmigen Emission des Methanols 2 in eine Reinigungsanordnung 5 zur Verringerung der Emission im Atmungsabgas 4 abgegeben wird. Unter dem Begriff "Atmungsabgas" ist vorliegend jedwedes Gas oder Gasgemisch zu verstehen, welches aus dem Produkttank 3 austritt und einen gasförmigen Bestandteil aus Methanol 2, welcher vorliegend als Emission bezeichnet wird, umfasst. Die Abgabe des Atmungsabgases 4 kann durch Temperaturveränderungen des Produkttanks 3 bzw. seiner Umgebung aus Sonnenstrahlen oder dem Tag-Nacht-Wechsel, welche Temperaturveränderungen eine stärkere Verdunstung des Methanols bewirken, durch Pumpvorgänge des Methanols 2 sowie durch eine Gasbeaufschlagung des Produkttanks 3 verursacht werden.

Diese Reinigungsanordnung 5 ist dabei bevorzugt von der Anlage 3 umfasst. In der Reinigungsanordnung 5 soll die obige Emission weitgehend oder im Wesentlichen vollständig aus dem Atmungsabgas 4 entfernt werden.

Vorschlagsgemäß ist daher vorgesehen, dass in der Reinigungsanordnung 5 das Atmungsabgas 4 einer Wasserwäsche zum Auswaschen der Emission unterzogen wird. Bei einer solchen Wasserwäsche, welche an sich aus dem Stand der Technik bekannt ist, wird das zu waschende Gas - hier also das Atmungsabgas 4 - mit Wasser aus einer Wasserzufuhr 6 gesättigt, sodass im Ergebnis einerseits Abwasser 7 mit der speziell aufgenommenen Emission und andererseits ein Restgas 8 abgegeben wird. Wie untenstehend noch beschrieben wird, kann die Reinigungsanordnung 5 gemäß dem Vorschlag zusätzlich weitere Mechanismen zur Verringerung der Emission in dem Atmungsabgas 5 vorsehen.

Das vorschlagsgemäße Verfahren ist nun dadurch gekennzeichnet, dass in der Reinigungsanordnung 5 eine Kühlung erfolgt. Diese Kühlung erfolgt insbesondere zur Erhöhung eines Reinigungsgrads bei der Verringerung der Emission. Unter dem Reinigungsgrad ist hier und nachfolgend der Anteil der Emission im abgegebenen Atmungsabgas 4 zu verstehen, der in der Reinigungsanordnung 5 aus dem Atmungsabgas 4 entfernt wird. Bei einem Reinigungsgrad von 99 % oder 0,99 werden also 99 von 100 Teilen des Methanols 2 in dem Atmungsabgas 4 - entsprechend der Emission - durch die Reinigungsanordnung 5 entfernt. Der Reinigungsgrad kann, da es sich um einen Quotienten handelt, gleichermaßen auf einen Gewichtsanteil, einen Molanteil oder einen Volumenanteil des Methanols 2 - und also der Emission - in dem Atmungsabgas 4 bezogen werden. Folglich weist das von der Reinigungsanordnung 5 abgegebene Restgas 8 einen entsprechend geringeren Anteil an der Emission auf. Mit anderen Worten ist der Anteil der Emission in dem Restgas 8 um den Reinigungsgrad geringer als im Atmungsabgas 4. Bei dem Anteil der Emission in diesem Sinne kann es sich entsprechend ebenso um einen Gewichtsanteil, einen Molanteil oder einen Volumenanteil des Methanols bzw. der Emission in dem Atmungsabgas 4 handeln. Die vorschlagsgemäße Kühlung erhöht den Reinigungsgrad, indem einerseits eine Kondensation der Emission zu Methanol 2 bzw. zu einem Produktkondensat 9 bewirkt wird. Andererseits wird auch die Löslichkeit der Emission bei der Wasserwäsche durch diese Kühlung verbessert.

Dabei wird eine Menge an dem Methanol 2, welche dem gemäß Reinigungsgrad verringerten Anteil der Emission entspricht, getrennt von dem Restgas 8 von der Reinigungsanordnung 5 abgegeben. So wird vorliegend das obige Produktkondensat 9, welches im Wesentlichen aus dem Methanol 2 besteht, und das Abwasser 7 mit dem aufgenommenen Methanol 2 von der Reinigungsanordnung 5 abgegeben. Die Einzelheiten hierzu werden untenstehend noch genauer beschrieben.

Vorschlagsgemäß wird das von dem Produkttank 3 aufgenommene Methanol 2 mit einem Schutzgas 10 beschleiert. Entsprechend umfasst das Atmungsabgas 4 das Schutzgas 10. Unter einer solchen Beschleierung mit dem Schutzgas 10 ist ein Vorgang zu verstehen, bei dem der Produkttank 3, soweit er nicht durch das Methanol 2 ausgefüllt ist, zumindest teilweise und vorzugsweise im Wesentlichen vollständig mit dem Schutzgas 10 angefüllt wird. Zu diesem Zweck ist bevorzugt vorgesehen, dass eine Beschleierungsvorrichtung 11 zur Beschleierung des in dem Produkttank 3 gelagerten Methanols 2 mit dem Schutzgas 10 vorgesehen ist, wobei dann auch das Atmungsabgas 4 das Schutzgas 10 umfasst. Insbesondere kann die Anlage 1 eine solche Beschleierungsvorrichtung 11 umfassen.

Die Beaufschlagung mit Schutzgas 10 kann dabei auf grundsätzlich beliebige Art und Weise realisiert werden, etwa durch eine druckbeaufschlagte Zufuhr des Schutzgases 10 in den Produkttank 3. Die Zufuhr des Schutzgases 10 in den Produkttank 4 kann ebenso grundsätzlich beliebig gesteuert oder geregelt werden. Es kann etwa ein Druck des Schutzgases 10 in dem Produkttank 4 vorgesehen sein, welcher leicht über dem Luftdruck in der Umgebung liegt, und die Zufuhr des Schutzgases 10 entsprechend geregelt werden. Dieses Schutzgas 10 kann Stickstoff 10a umfassen oder aus Stickstoff 10a bestehen. Stickstoff 10a weist eine gute Inertheit auf und ist an sich ökologisch unbedenklich.

Das Atmungsabgas 4 kann einerseits nur aus dem Schutzgas 10 und der Emission bestehen. Dies ist etwa dann der Fall, wenn sich in dem Produkttank 4 nur Methanol 2 und das Schutzgas 10 befinden. Dann besteht das obige Restgas 8 im Wesentlichen ebenfalls nur aus dem Schutzgas 10.

Es ist aber auch möglich, dass das Atmungsabgas 4 neben dem Schutzgas 10 und der Emission des Methanols noch weitere Bestandteile aufweist, so etwa Luft - also die Umgebungsluft - bzw. deren Bestandteile neben Stickstoff 10a. Es kann nämlich sein, dass insbesondere bei z. B. meteorologisch bedingten Abkühlungsvorgängen des Produkttanks 3 bzw. seiner Umgebung und einer entsprechenden Verringerung des Volumens des Methanols 2 in dem Produkttank 3 nicht ausreichend Schutzgas 10 zum Ausfüllen dieses Volumens bereitgestellt werden kann. In diesem Fall gelangt auch Umgebungsluft in entsprechendem Umfang in den Produkttank 3 und ist folglich auch in später - etwa nach einer neuerlichen Erwärmung - austretendem Atmungsabgas 4 enthalten.

Weiter ist es bevorzugt, dass das Schutzgas 10 zumindest teilweise, vorzugsweise aber vollständig, bei der Herstellung des Methanols 2 anfällt, und zwar insbesondere in der Anlage 1. Eine bevorzugte und unten noch näher beschriebene Variante sieht vor, dass das Schutzgas 10 - insbesondere der Stickstoff 10a - zumindest teilweise und vorzugsweise in der Anlage 1 bei einer Luftzerlegung 12 zum Gewinnen von Sauerstoff 12a anfällt. Unter einer "Luftzerlegung" 12 in diesem Sinne ist also eine Vorrichtung zur Luftzerlegung zu verstehen. Vorteilhafterweise ist dann keine gesonderte Herstellung des Schutzgases 10 und auch kein Transport über eine potenziell lange Strecke erforderlich.

Bevorzugt ist, dass in der Reinigungsanordnung 5 eine Kühlung des Atmungsabgases 4 erfolgt. Diese Kühlung kann insbesondere - wie in den Fig. 1 und 3 dargestellt - der Wasserwäsche prozesstechnisch vorgelagert sein. Die vorschlagsgemäße Kühlung betrifft also nicht unmittelbar das Wasser der Wasserwäsche, sondern vielmehr das Atmungsabgas 4 vor dem Beginn der Wasserwäsche im engeren Sinne. Das hat den Vorteil, dass bereits vor der Wasserwäsche eine Kondensation der Emission aus dem Atmungsabgas 4 stattfinden kann. Diese führt zwar regelmäßig nicht zu einer hundertprozentigen Reinigung des Atmungsabgases 4 von der Emission, kann aber bereits eine jedenfalls merkliche Reinigung des Atmungsabgases 4 von der Emission erreichen. Dadurch kann die anschließende Wasserwäsche kleiner dimensioniert werden. Speziell kann also vorgesehen sein, dass das Atmungsabgas 4 prozesstechnisch der Wasserwäsche vorgelagert einer Kondensation zum partiellen Ausscheiden der Emission unterzogen wird.

Weiter ist hier bevorzugt, dass das Atmungsabgas 4 in der Reinigungsanordnung 5 auf einen Temperaturbereich von 0° C bis 20° C, insbesondere von 5° C bis 10° C und weiter insbesondere auf eine Temperatur von im Wesentlichen 5° C oder im Wesentlichen 10° C abgekühlt wird.

Bezogen auf die Reinigungsanordnung 5 ist dementsprechend bevorzugt vorgesehen, dass sie prinzipiell in zwei Stufen aufgeteilt ist. Es kann also die Reinigungsanordnung 5 eine Kondensationsstufe 13 für die Kondensation und eine der Kondensationsstufe 13 prozesstechnisch nachgelagerte Wasserwäschestufe 14 für die Wasserwäsche 14 umfassen, wobei das Atmungsabgas 4 gasförmig und insbesondere gekühlt von der Kondensationsstufe 13 zu der Wasserwäschestufe 14 geführt wird. Es ist weiter bevorzugt, dass diese Wasserwäschestufe 14 eine Kolonne 14a zur Wasserwäsche aufweist.

In der Praxis kann ein Maximalwert des Massenstroms an austretendem Methanol 2 im Restgas 8 wie folgt angesetzt werden: Aus dem Volumen des Produkttanks 4, der maximalen Menge an Methanol 2 in dem Produkttank 4 und Erfahrungswerten zum Verlauf der Umgebungstemperatur kann ein maximaler Massenstrom an Atmungsabgas 4 ermittelt werden. Aus dem Sättigungsdampfdruck lässt sich der maximale Anteil der Emission an dem Atmungsabgas 4 und damit der maximale Massenstrom an Methanol 2 in dem Atmungsabgas 4 bestimmen. Aus der Kühltemperatur folgt dann der maximale Massenstrom an Methanol 2, welcher nach der obigen Kondensation in der Kondensationsstufe 13 noch in dem der Wasserwäsche zugeführten Atmungsabgas 4 verbleibt. Daraus kann dann die Menge an Wasser ermittelt werden, welche über die Wasserzufuhr 6 der Wasserwäsche zugeführt werden muss, um den entsprechenden Maximalwert des Massenstroms an austretendem Methanol 2 im Restgas 8 zu erhalten.

So wird es ermöglicht, dass bevorzugt das von der Kondensationsstufe 13 an die Wasserwäschestufe 14 geführte Atmungsabgas 4 einen im Wesentlichen konstanten Anteil an der Emission, was insbesondere als Anteil am Massestrom des Atmungsabgases 4 verstanden werden kann, aufweist. Somit kann, wie bevorzugt, die Wasserwäschestufe 14 mit einem im Wesentlichen konstanten Massestrom an Wasser beaufschlagt werden. Dieser Massestrom an Wasser kann gemäß einem gewünschten Reinigungsgrad oder einem gewünschten maximalen Massestrom an Methanol 2 im Restgas 8 gemäß den obenstehenden Berechnungen ermittelt werden. Aus den untenstehenden, noch zu erläuternden Beispielen hat sich praktisch ergeben, dass dieser im Wesentlichen konstante Massestrom an Wasser vorzugsweise um mindestens den Faktor 2, weiter insbesondere um mindestens den Faktor 2,5, kleiner als der Massestrom an aus dem Produkttank 3 abgegebenem Atmungsabgas 4 angesetzt werden kann.

Eine bevorzugte Ausführungsform sieht dann vor, dass in der Wasserwäschestufe 14 anfallendes Abwasser 7 einer Destillationsstufe 35 zum Entgasen und/oder Entwässern zugeführt wird.

Bezüglich der Kondensationsstufe 13 ist bevorzugt vorgesehen, dass sie eine Kühlvorrichtung 15 - hier insbesondere einen Wärmetauscher 15a - zum Kühlen des Atmungsabgases 4 aufweist, sodass die Emission teilweise - vorzugsweise zu mindestens 80 % - in der Kondensationsstufe 13 zu dem Produktkondensat 9 kondensiert wird. Dies kann, wie in den Fig. 1 und 3 dargestellt, in einem dem Wärmetauscher 15a prozesstechnisch nachgeordneten Abscheider 16 der Kondensationsstufe 3 erfolgen. Das Produktkondensat 9 besteht dann im Wesentlichen aus dem Methanol 2. Gemäß einer vorteilhaften Ausgestaltung können unter dem Begriff der "Kühlvorrichtung" Vorrichtungen verstanden, die dazu eingerichtet sind, prozesstechnisch eine Kühlung auf bis zu im Wesentlichen 0° C zu erreichen. Gemäß dieser bevorzugten Ausgestaltung werden herkömmlich betriebene Kältefallen, welche üblicherweise bei Temperaturen von im Wesentlichen - 78° C arbeiten, hierunter nicht verstanden. Auf diese Weise kann mit dem erfindungsgemäßen Verfahren zusätzlich eine Energieeinsparung bei der Kühlung erzielt werden.

Interessant dabei ist, dass dieses Produktkondensat 9 dann ohne weitere Behandlung wie das Methanol 2 in dem Produkttank 3 verwertet werden kann. Daher ist es bevorzugt, dass das Produktkondensat 9 in einen Kondensattank 17 geführt wird. Bei diesem Kondensattank 17 kann es sich gemäß einer bevorzugten Variante um den obigen Produkttank 4 handeln.

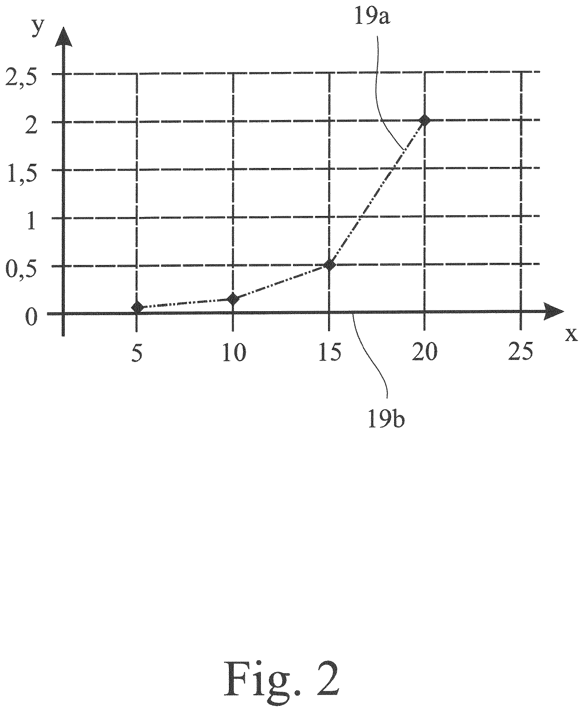

Die obige Kühlung kann etwa dadurch verwirklicht werden, dass eine Zuführvorrichtung 18a für ein Kühlmedium und entsprechend eine Abführvorrichtung 18b für das Kühlmedium - nach erfolgter Kühlung des Atmungsabgases 4 - in der Reinigungsanordnung 5 gemäß der Darstellung der Fig. 1 und 3 vorgesehen ist. Bei den in den Fig. 1 und 3 dargestellten Ausführungsbeispielen mit Stickstoff 10a als Schutzgas 10 hat sich nämlich herausgestellt, dass bereits der Temperaturbereich von 5° C bis 20° C, welcher einer vergleichsweise moderaten Kühlung und entsprechend einer überschaubaren erforderlichen Kühlleistung entspricht, bereits zu sehr guten Erhöhungen des Reinigungsgrads führt. Die entsprechenden Ergebnisse für die Ausführungsform der Fig. 1 sind in der Fig. 2 dargestellt.

Angegeben in der Fig. 2 ist der Massenstrom des Methanolrestes 19a, also der Massenstrom an Methanol in kg/h im austretenden Restgas 8, in Abhängigkeit von der Kühltemperatur 19b in ° Celsius. Diese Kühltemperatur ist diejenige Temperatur, auf die das Atmungsabgas 4 in der Reinigungsanordnung 5 abgekühlt wird. Dabei beträgt der Massenstrom in dem von dem Produkttank 3 abgegebenen Atmungsabgas 4 - also vor der Verarbeitung durch die Reinigungsanordnung 5 - 1000 kg/h. Die vier Beispiele, aus denen Ergebnis der Fig. 2 entnommen werden kann, sind untenstehend detailliert aufgeführt.

Weiter ist es bevorzugt, dass diese Kühlung durch Zufuhr eines Kühlmediums erfolgt, wobei das Kühlmedium durch eine bei einer Luftzerlegung 12 zum Gewinnen von Sauerstoff anfallende Kühlleistung gekühlt wird. Eine solche Zufuhr und die entsprechende Abfuhr können mittels der obigen Zuführvorrichtung 18a und der obigen Abführvorrichtung 18b erfolgen. Es kann sich bei der Luftzerlegung 12 um diejenige Luftzerlegung 12 insbesondere der Anlage 1 handeln, bei welcher auch das Schutzgas 10 wie oben beschrieben zumindest teilweise anfällt. Weiter kann zusätzlich die Luftzerlegung 12 durch Gewinnen von Sauerstoff der Herstellung des Methanols 2 dienen, wie untenstehend in Bezug auf eine Synthesegasherstellung beschrieben wird. Dann können sowohl das Schutzgas 10 als auch die Kühlleistung von der Luftzerlegung 12 und damit als Nebenprodukte in der Anlage 1 selbst bereitgestellt werden. Hier ist bevorzugt vorgesehen, dass das Kühlmedium im Wesentlichen aus Wasser besteht. Weitere bevorzugte Möglichkeiten sehen vor, dass das Kühlmedium Ammoniak oder Isobutan umfasst oder im Wesentlichen aus Ammoniak oder Isobutan besteht.

Alternativ oder zusätzlich kann die Kühlleistung auch durch ein insbesondere separates Kühlaggregat, insbesondere ein Kompressionskühlaggregat, bereitgestellt werden.

Grundsätzlich kann mehr als ein Tank oder Behältnis in der Anlage 3 für das Methanol 2 vorgesehen sein. Gemäß dem Ausführungsbeispiel der Fig. 1 und 3 ist der Produkttank 3 ein Zwischentank 3a, welcher einem Haupttank 3b zum Transport des Methanols 2 prozesstechnisch vorgelagert ist. Es können auch mehrere solche Zwischentanks 3a vorgesehen sein. Der Transport kann durch das Verladen auf ein Fahrzeug erfolgen oder dadurch, dass das Methanol einer weiteren Verarbeitungsstufe - z. B. innerhalb derselben Anlage 1 - über eine Transportanordnung 3c zugeführt wird. Bei einem solchen Zwischentank 3a kann es sich etwa um einen sogenannten Shift-Tank handeln, in welchem das Methanol 2 vor dem Transport analysiert wird. Hier ist weiter bevorzugt, dass eine Gaspendelleitung 20 zum Verringern der gasförmigen Emission bei einem Umpumpen zwischen dem Zwischentank 3a und dem Haupttank 3b angeordnet ist. Ebenso ist es möglich, dass das obige Produktkondensat 9 in den Haupttank 3b geführt wird.

Zurückkommend auf die jeweils in den Fig. 1 und 3 dargestellte Anlage 1 insgesamt ist bevorzugt vorgesehen, dass in der Anlage 1 zur Herstellung von Methanol 2 das Methanol 2 aus einem Rohstoff 21 hergestellt wird, wobei dieser Rohstoff 21 Erdgas 22a und alternativ oder zusätzlich Rohöl 22b umfasst. Entsprechend wird zur Herstellung von Methanol 2 als Zwischenprodukt ein Synthesegas 23 aus dem Rohstoff 22 erzeugt und das Synthesegas 23 katalytisch in das Methanol 2 umgewandelt. Vorzugsweise umfasst das Synthesegas 23 im Wesentlichen Kohlenmonoxid, Wasserstoff und ggf. Kohlendioxid. Bezüglich der obigen Luftzerlegung 12 ist hier bevorzugt, dass der durch die Luftzerlegung 12 gewonnene Sauerstoff zum Erzeugen des Synthesegases 23 verwendet wird.

Die in der Fig. 1 dargestellte Anlage 1 sieht dabei Erdgas 22a als Rohstoff 21 vor. Insbesondere ist entsprechend vorgesehen, dass die Anlage 1 einen Autothermreformer 24 zum Erzeugen des Synthesegases 23 umfasst, dem ein mit Prozesskondensat und Dampf gesättigtes und aus dem Erdgas 22a erzeugtes Prozessgas 25 zugeführt wird. Unter dem Begriff "Prozesskondensat" ist hier vor allem eine Mischung aus Wasser mit Lösgasen - etwa Kohlendioxid und Ammoniak - zu verstehen, welches in einem prozesstechnisch nachgelagerten - und noch zu beschreibendem - Abhitzesystem anfällt und hier zurückgeführt wird. Unter dem Autothermreformer 24 wiederum ist eine an sich aus dem Stand der Technik bekannte Vorrichtung zum Erzeugen des Synthesegases 23 zu verstehen. Speziell handelt es sich um einen adiabatisch arbeitenden Katalysereaktor, in welchem durch Zusatz von vorgeheiztem Sauerstoff das Synthesegas erzeugt wird.

Gemäß der Darstellung der Fig. 1 wird hierzu das Erdgas 22a in einer Entschwefelungseinheit 26, z. B. einem Zinkoxidbett, entschwefelt und dann einem Sättiger 27 zur Sättigung mit dem obigen Prozesskondensat und Dampf zugeführt. Aus dem dann entstehenden Prozessgas 25 wird dann in dem Autothermreformer 24 unter Zusatz von in der Luftzerlegung 12 gewonnenem und vorgeheiztem Sauerstoff das Synthesegas 23 erzeugt.

Es ist ebenso bevorzugt, dass die Anlage 1 einen Prereformer 28a und einen dem Prereformer 28a nachgeschalteten Steamreformer 28b in einer Abzweigung aufweist, dass der Prereformer 28a aus abgezweigtem Prozessgas 25 ein Spaltgas erzeugt, dass der Steamreformer 28b das Spaltgas in ein weiteres Synthesegas 29 umwandelt und dass das weitere Synthesegas 29 dem Autothermreformer 24 zugeführt wird. Bei dem Prereformer 28a kann es sich insbesondere um einen adiabatisch arbeitenden Katalysereaktor handeln. Das aus dem Prozessgas 25 in dem Prereformer 28a erzeugte Spaltgas, welches Methan, Wasserstoff, Kohlendioxid und Kohlenmonoxid umfasst oder im Wesentlichen aus diesen Bestandteilen besteht, wird dem Steamreformer 28b zur Dampfreformierung zugeführt, wobei dann erst das in dem Steamreformer 28b erzeugte weitere Synthesegas 29 mit dem Prozessgas 25 zusammengeführt und das resultierende Gemisch dem Autothermreformer 24 zugeführt wird. Bei einem solchen Steamreformer 28b, welcher hier das Spaltgas allotherm katalytisch zu dem weiteren Synthesegas 29 mit Kohlenmonoxid, Wasserstoff und Kohlendioxid umwandelt, kann es sich um einen außenbeheizten Röhrenreaktor mit Nickel-Katalysator handeln

Das Synthesegas 23 wird dann in einem Abhitzesystem 30 - in dem das obige Prozesskondensat anfällt - abgekühlt, durch einen Synthesegas-Kompressor 31 komprimiert und anschließend einer Reaktoranordnung 32 zugeführt, welche jeweils einen wassergekühlten und einen gasgekühlten Reaktor umfassen kann, in welcher Reaktoranordnung 32 das Synthesegas 23 katalytisch umgewandelt wird, sodass nach einer Kondensation ein Rohmethanol 2b mit einem Methanolanteil von etwa 80 % erhalten wird. Während dieser Synthese wird eine Teilmenge an Synthesegas 23 über eine Kreislaufleitung 33 im Kreislauf gefahren und dabei mittels eines Recycle-Kompressors 34 auf einen erforderlichen Druck gebracht.

Zum Entgasen und zum Reinigen des Rohmethanols 2b von weiteren Produkten ist eine nachfolgende Destillation vorgesehen. Gemäß dieser bevorzugten Ausführungsform umfasst also die Umwandlung des Synthesegases 23 in Methanol 2a die Umwandlung in ein Rohmethanol 2b, welches Rohmethanol 2b vorzugsweise zum Gewinnen des Methanols 2a der Destillationsstufe 35 zum Entgasen und/oder Entwässern zugeführt wird. Das aus der Destillationsstufe 35 gewonnene Methanol 2 wird dann in den Produkttank 3 geführt. Zur Reinigung des in der obigen Wasserwäschestufe 14 anfallenden Abwassers 7 kann dieses Abwasser 7 dann wie erwähnt und in der Fig. 1 dargestellt zur Destillationsstufe 35 zurückgeführt werden, sodass eine Doppelnutzung der Destillationsstufe 35 stattfindet.

Gemäß einer bevorzugten Ausführungsform, welche insbesondere Rohöl 22b als Rohstoff 21 betrifft, umfasst die Anlage 1 für die Herstellung des Synthesegases 23 einen POX-Reaktor 36 zur nichtkatalytischen partiellen Oxidation. Die Fig. 3 zeigt eine entsprechende Variante einer Anlage 1 zur Ausführung des vorschlagsgemäßen Verfahrens mit einem solchen POX-Reaktor 36, wobei hier lediglich auf die Unterschiede gegenüber der Ausführungsform der Fig. 1 eingegangen wird.

Hier ist bevorzugt, dass dem POX-Reaktor 36 das Rohöl 22b nach erfolgter Erhitzung des Roh-öls 22b - hier durchgeführt in einer Heizvorrichtung 37 - zugeführt wird. Ebenso wird dem POX-Reaktor 36 bevorzugt in der Luftzerlegung 12 gewonnener und vorgeheizter Sauerstoff 12a sowie Wasserdampf zugeführt und das zugeführte Rohöl 22b, der Sauerstoff 12a und der Wasserdampf in dem POX-Reaktor 36 mittels nichtkatalytischer partieller Oxidation in das Synthesegas 23 gespalten wird. Dieses Synthesegas 23 umfasst vorzugsweise überwiegend Kohlenmonoxid und Wasserstoff. Das Synthesegas 23 wird in einer Nachbehandlungsanordnung 38 mit Wasser gequencht, einer Wärmeabfuhr in einem Abhitzesystem 39 unterzogen und aufgeteilt in zwei Gasströme, wobei ein Gasstrom mit Dampf gemischt wird und einem CO-Shiftreaktor 39a zugeführt wird. Dieser Gasstrom wird gekühlt und in einem Wäscher 40 zum Abtrennen von CO2 und Schwefelwasserstoffverbindungen gewaschen. Von dort gelangt dieser Gasstrom mit dem anderen Gasstrom zum Synthesegas-Kompressor 31 und wird wie bereits für die Fig. 1 beschrieben weiterverarbeitet.

Das Ausführungsbeispiel der Fig. 3 zeigt - hier ebenfalls abweichend von dem Ausführungsbeispiel der Fig. 1 - eine bevorzugte Variante, gemäß der die Anlage 1 zur Herstellung des Methanols 2 eine Zwischenstufe einer Anlage 1a zur Herstellung eines wasserhaltigen Kohlenwasserstoffgemisches 41 ist. Hier wird das hergestellte Methanol 2 katalytisch in ein Dimethylether/Methanol/WasserGemisch 42 umgewandelt und das Dimethylether/Methanol/Wasser-Gemisch 42 in mindestens einem adiabatisch arbeitenden Reaktor 43 in das wasserhaltige Kohlenwasserstoffgemisch 41 umgewandelt. Speziell wird das Methanol 2 aus dem Haupttank 3b einem Festbettreaktor - dem DME-Reaktor 44 - zugeführt und dort katalytisch in das Dimethylether/Methanol/Wassergemisch 42 umgewandelt. Das Dimethylether/Methanol/Wassergemisch 42 aus dem DME-Reaktor 44 wird dann dem mindestens einen adiabatisch arbeitenden Reaktor 43 zugeführt, wobei es zusätzlich mit einem Recyclegas aus einer nachgeschalteten Entgasungseinheit 45 versetzt wird. Nach Durchlauf dieser Entgasungseinheit 45 enthält das wasserhaltige Kohlenwasserstoffgemisch 41 vorzugsweise im Wesentlichen keine sauerstoffhaltigen Verbindungen mehr.

Die vorschlagsgemäße Tankanordnung für Methanol 2 weist einen Produkttank 3 zur Aufnahme von - insbesondere in der Anlage 1 hergestelltem - Methanol 2 auf. Die vorschlagsgemäße Tankanordnung weist ebenso eine Reinigungsanordnung 5 und eine Abgabeleitung zur Abgabe eines Atmungsabgases 4 von dem Produkttank 3 an die Reinigungsanordnung 5 auf, wobei das Atmungsabgas 4 eine gasförmige Emission des Methanols 2 umfasst und wobei die Reinigungsanordnung 5 eine Wasserwäschestufe 14 zum Auswaschen der Emission aus dem Atmungsabgas 4 aufweist.

Die vorschlagsgemäße Tankanordnung ist dadurch gekennzeichnet, dass die Reinigungsanordnung 5 eine Kühlvorrichtung 15 zum Kühlen des Atmungsabgases 4 aufweist. Eine bevorzugte Weiterbildung der vorschlagsgemäßen Tankanordnung sieht vor, dass die Tankanordnung eine Beschleierungsvorrichtung 11 zur Beschleierung des von dem Produkttank 3 aufgenommenen Methanols 2 mit einem Schutzgas 10 umfasst und dass das Atmungsabgas 4 das Schutzgas 10 umfasst.

Bevorzugt ist auch, dass die Reinigungsanordnung 5 einer der Wasserwäschestufe 14 prozesstechnisch vorgelagerte Kondensationsstufe 13 zum partiellen Ausscheiden der Emission aufweist. Dabei weist die Kondensationsstufe 13 die Kühlvorrichtung 15 zum Kühlen des Atmungsabgases 4 und insbesondere eine Wasserwäschezuleitung zur gasförmigen und gekühlten Zuleitung des Atmungsabgases 4 von der Kondensationsstufe 13 zu der Wasserwäschestufe 14 aufweist.

Weitere bevorzugte Ausgestaltungen und Merkmale der vorschlagsgemäßen Tankanordnung ergeben sich aus den entsprechenden Ausgestaltungen und Merkmalen des vorschlagsgemäßen Verfahrens und umgekehrt.

Nachfolgend werden für vier Beispiele, welche auf die Anlage gemäß der Fig. 1 bezogen sind, verschiedene Werte an den Prozessknoten 46a-g gemäß der Darstellung der Fig. 1 angegeben. Bei allen vier Beispielen beträgt der Molanteil der Emission 35 % und der Massenstrom der Emission bzw. des Methanols 1000 kg/hr im unbehandelten Atmungsabgas 4 am Prozesspunkt 46a.

### Beispiel 1:

Bei dem ersten Beispiel findet eine Kühlung des Atmungsabgases 4 auf 5° C statt. Das Ergebnis ist ein Reinigungsgrad von 99,996%. Bereits die Kondensationsstufe reduziert den Molanteil der Emission im Atmungsabgas 4 im Prozesspunkt 46c auf etwas mehr als 5 %.

| | 46a | 46b | 46c | 46d | 46e | 46f | 46g |
|---|---|---|---|---|---|---|---|
| Molenstrom kmol/hr | | | | | | | |
| H2O | 0 | 0 | 0 | 0 | 55.508 | 52.391 | 3.117 |
| CH4O | 31.209 | 31.209 | 3.297 | 27.912 | 0.000 | 3.296 | 0.00136 |
| N2 | 57.960 | 57.960 | 57.953 | 0.007 | 0.000 | 0.001 | 57.952 |
| Molanteil | | | | | | | |
| H2O | 0 | 0 | 0 | 0 | 1 | 0.9408 | 0.0510 |
| CH4O | 0.35 | 0.35 | 0.05383 | 0.99975 | 0 | 0.05918 | 2.22E-05 |
| N2 | 0.65 | 0.65 | 0.94617 | 0.00025 | 0 | 1.51E-05 | 0.94894 |

| Massenstrom kg/hr | | | | | | | |
|---|---|---|---|---|---|---|---|
| H2O | 0 | 0 | 0 | 0 | 1000 | 943.85 | 56.15 |
| CH4O | 1000.0 | 1000.0 | 105.6 | 894.4 | 0 | 105.600 | 0.043 |
| N2 | 1623.7 | 1623.7 | 1623.5 | 0.20 | 0 | 0.023 | 1623.44 |

| Massenanteil | | | | | | | |
|---|---|---|---|---|---|---|---|
| H2O | 0 | 0 | 0 | 0 | 1 | 0.8994 | 0.0334 |
| CH4O | 0.3811 | 0.3811 | 0.0611 | 0.9998 | 0 | 0.1006 | 2.59E-05 |
| N2 | 0.6189 | 0.6189 | 0.9389 | 0.0002 | 0 | 2.24E-05 | 0.9665 |
| Molmasse kmol/hr | 89.169 | 89.169 | 61.24987 | 27.91913 | 55.50844 | 55.68794 | 61.07037 |
| Masse kg/hr | 2623.666 | 2623.666 | 1729.105 | 894.561 | 1000 | 1049.47 | 1679.635 |
| Volumen cum/hr | 2272 | 1395.1 | 1394.0 | 1.0960 | 1.0077 | 1.0796 | 1.55E+03 |
| Temperatur C | 40 | 5 | 5 | 5 | 40 | 2.45E+01 | 33.20659 |
| Druck bar | 1.018 | 1.015 | 1.015 | 1.015 | 2 | 1.005 | 1.005 |
| Gasanteil | 1 | 0.6869 | 1 | 0 | 0 | 0 | 1 |
| Flüssigkeitsanteil | 0 | 0.3131 | 0 | 1 | 1 | 1 | 0 |
| Dichte kg/cum | 1.15 | 1.88 | 1.24 | 816.20 | 992.34 | 972.14 | 1.09 |
| Molekulargewicht MW | 29.424 | 29.424 | 28.230 | 32.041 | 18.015 | 18.846 | 27.503 |

### Beispiel 2:

Bei dem zweiten Beispiel findet eine Kühlung des Atmungsabgases 4 auf 10° C statt. Das Ergebnis ist ein Reinigungsgrad von 99,981%. Die Kondensationsstufe reduziert den Molanteil der Emission im Atmungsabgas 4 im Prozesspunkt 46c auf nunmehr noch 7 %.

| | 46a | 46b | 46c | 46d | 46e | 46f | 46g |
|---|---|---|---|---|---|---|---|
| Molenstrom kmol/hr | | | | | | | |
| H2O | 0 | 0 | 0 | 0 | 55.508 | 51.795 | 3.713 |
| CH4O | 31.209 | 31.209 | 4.545 | 26.664 | 0.000 | 4.539 | 0.00601 |
| N2 | 57.960 | 57.960 | 57.953 | 0.007 | 0.000 | 0.001 | 57.952 |
| Molanteil | | | | | | | |
| H2O | 0 | 0 | 0 | 0 | 1 | 0.9194 | 0.0602 |
| CH4O | 0.35 | 0.35 | 0.07273 | 0.99975 | 0 | 0.08058 | 9.74E-05 |
| N2 | 0.65 | 0.65 | 0.92727 | 0.00025 | 0 | 1.54E-05 | 0.93969 |

| Massenstrom kg/hr | | | | | | | |
|---|---|---|---|---|---|---|---|
| H2O | 0 | 0 | 0 | 0 | 1000 | 933.11 | 66.89 |
| CH4O | 1000.0 | 1000.0 | 145.6 | 854.4 | 0 | 145.454 | 0.193 |
| N2 | 1623.7 | 1623.7 | 1623.5 | 0.18 | 0 | 0.024 | 1623.45 |

| Massenanteil | | | | | | | |
|---|---|---|---|---|---|---|---|
| H2O | 0 | 0 | 0 | 0 | 1 | 0.8651 | 0.0396 |
| CH4O | 0.3811 | 0.3811 | 0.0823 | 0.9998 | 0 | 0.1349 | 0.000113 87 |
| N2 | 0.6189 | 0.6189 | 0.9177 | 0.0002 | 0 | 2.25E-05 | 0.9603 |
| Molmasse kmol/hr | 89.169 | 89.169 | 62.49874 | 26.67026 | 55.50844 | 56.33562 | 61.67156 |
| Masse kg/hr | 2623.666 | 2623.666 | 1769.119 | 854.546 | 1000 | 1078.585 | 1690.535 |
| Volumen cum/hr | 2272 | 1448.891 | 1447.8 | 1.0544 | 1.0077 | 1.1219 | 1.58E+0 3 |
| Temperatur C | 40 | 10 | 10 | 10 | 40 | 2.99E+01 | 36.19481 |
| Druck bar | 1.018 | 1.015 | 1.015 | 1.015 | 2 | 1.005 | 1.005 |
| Gasanteil | 1 | 0.7009 | 1 | 0 | 0 | 0 | 1 |
| Flüssigkeitsanteil | 0 | 0.2991 | 0 | 1 | 1 | 1 | 0 |
| Dichte kg/cum | 1.15 | 1.81 | 1.22 | 810.43 | 992.34 | 961.39 | 1.07 |
| Molekulargewicht MW | 29.424 | 29.424 | 28.306 | 32.041 | 18.015 | 19.146 | 27.412 |

### Beispiel 3:

Bei dem dritten Beispiel findet eine Kühlung des Atmungsabgases 4 auf 15° C statt. Das Ergebnis ist ein Reinigungsgrad von 99.916 %. Die Kondensationsstufe reduziert den Molanteil der Emission im Atmungsabgas 4 im Prozesspunkt 46c auf knapp unter 10 %.

| | 46a | 46b | 46c | 46d | 46e | 46f | 46g |
|---|---|---|---|---|---|---|---|
| Molenstrom kmol/hr | | | | | | | |
| H2O | 0 | 0 | 0 | 0 | 55.508 | 50.858 | 4.651 |
| CH4O | 31.209 | 31.209 | 6.232 | 24.978 | 0.000 | 6.205 | 0.02625 |
| N2 | 57.960 | 57.960 | 57.954 | 0.006 | 0.000 | 0.001 | 57.953 |

| Molanteil | | | | | | | |
|---|---|---|---|---|---|---|---|
| H2O | 0 | 0 | 0 | 0 | 1 | 0.8912 | 0.0743 |
| CH4O | 0.35 | 0.35 | 0.09709 | 0.99976 | 0 | 0.10874 | 0.00041 911 |
| N2 | 0.65 | 0.65 | 0.90291 | 0.00024 | 0 | 1.64E-05 | 0.92533 |

| Massenstrom kg/hr | | | | | | | |
|---|---|---|---|---|---|---|---|
| H2O | 0 | 0 | 0 | 0 | 1000 | 916.22 | 83.78 |
| CH4O | 1000.0 | 1000.0 | 199.7 | 800.3 | 0 | 198.832 | 0.841 |
| N2 | 1623.7 | 1623.7 | 1623.5 | 0.17 | 0 | 0.026 | 1623.46 |

| Massenanteil | | | | | | | |
|---|---|---|---|---|---|---|---|
| H2O | 0 | 0 | 0 | 0 | 1 | 0.8217 | 0.0490 |
| CH4O | 0.3811 | 0.3811 | 0.1095 | 0.9998 | 0 | 0.1783 | 0.00049 24 |
| N2 | 0.6189 | 0.6189 | 0.8905 | 0.0002 | 0 | 2.35E-05 | 0.9505 |
| Molmasse kmol/hr | 89.169 | 89.169 | 64.18541 | 24.98359 | 55.50844 | 57.06415 | 62.6297 |
| Masse kg/hr | 2623.666 | 2623.666 | 1823.162 | 800.504 | 1000 | 1115.077 | 1708.08 4 |
| Volumen cum/hr | 2272 | 1513.913 | 1512.9 | 0.9949 | 1.0077 | 1.1762 | 1621.87 9 |
| Temperatur C | 40 | 15 | 15 | 15 | 40 | 3.48E+01 | 40.0954 7 |
| Druck bar | 1.018 | 1.015 | 1.015 | 1.015 | 2 | 1.005 | 1.005 |
| Gasanteil | 1 | 0.7198 | 1 | 0 | 0 | 0 | 1 |
| Flüssigkeitsanteil | 0 | 0.2802 | 0 | 1 | 1 | 1 | 0 |
| Dichte kg/cum | 1.15 | 1.73 | 1.21 | 804.62 | 992.34 | 948.05 | 1.05 |
| Molekulargewicht MW | 29.424 | 29.424 | 28.405 | 32.041 | 18.015 | 19.541 | 27.273 |

Bei dem vierten Beispiel schließlich findet eine Kühlung des Atmungsabgases 4 auf 20° C statt. Das Ergebnis ist ein Reinigungsgrad von noch 99.667 %. Die Kondensationsstufe reduziert den Molanteil der Emission im Atmungsabgas 4 im Prozesspunkt 46c auf etwa 12 %.

| | 46a | 46b | 46c | 46d | 46e | 46f | 46g |
|---|---|---|---|---|---|---|---|
| Molenstrom kmol/hr | | | | | | | |
| H2O | 0 | 0 | 0 | 0 | 55.508 | 49.467 | 6.041 |
| CH4O | 31.209 | 31.209 | 8.518 | 22.692 | 0.000 | 8.414 | 0.10396 |
| N2 | 57.960 | 57.960 | 57.955 | 0.005 | 0.000 | 0.001 | 57.954 |

| Molanteil | | | | | | | |
|---|---|---|---|---|---|---|---|
| H2O | 0 | 0 | 0 | 0 | 1 | 0.8546 | 0.0943 |
| CH4O | 0.35 | 0.35 | 0.12814 | 0.99977 | 0 | 0.14536 | 0.0016219 |
| N2 | 0.65 | 0.65 | 0.87186 | 0.00023 | 0 | 1.81E-05 | 0.90413 |

| Massenstrom kg/hr | | | | | | | |
|---|---|---|---|---|---|---|---|
| H2O | 0 | 0 | 0 | 0 | 1000 | 891.16 | 108.84 |
| CH4O | 1000.0 | 1000.0 | 272.9 | 727.1 | 0 | 269.588 | 3.331 |
| N2 | 1623.7 | 1623.7 | 1623.5 | 0.15 | 0 | 0.029 | 1623.48 |

| Massenanteil | | | | | | | |
|---|---|---|---|---|---|---|---|
| H2O | 0 | 0 | 0 | 0 | 1 | 0.7677 | 0.0627 |
| CH4O | 0.3811 | 0.3811 | 0.1439 | 0.9998 | 0 | 0.2322 | 0.0019192 6 |
| N2 | 0.6189 | 0.6189 | 0.8561 | 0.0002 | 0 | 2.53E-05 | 0.9354 |
| Molmasse kmol/hr | 89.169 | 89.169 | 66.47206 | 22.69694 | 55.50844 | 57.88162 | 64.09887 |
| Masse kg/hr | 2623.666 | 2623.666 | 1896.428 | 727.238 | 1000 | 1160.78 | 1735.648 |
| Volumen cum/hr | 2272 | 1594.543 | 1593.6 | 0.9105 | 1.0077 | 1.2454 | 1684.187 |
| Temperatur C | 40 | 20 | 20 | 20 | 40 | 3.93E+01 | 44.70115 |
| Druck bar | 1.018 | 1.015 | 1.015 | 1.015 | 2 | 1.005 | 1.005 |
| Gasanteil | 1 | 0.7455 | 1 | 0 | 0 | 0 | 1 |
| Flüssigkeitsanteil | 0 | 0.2545 | 0 | 1 | 1 | 1 | 0 |
| Dichte kg/cum | 1.15 | 1.65 | 1.19 | 798.76 | 992.34 | 932.03 | 1.03 |
| Molekulargewicht MW | 29.424 | 29.424 | 28.530 | 32.041 | 18.015 | 20.054 | 27.078 |

## Patentansprüche

1. Verfahren zur Reduzierung der Emission von Methanol (2), wobei das Methanol (2) von einem Produkttank (3) aufgenommen wird, wobei aus dem Produkttank (3) ein Atmungsabgas (4) mit einer gasförmigen Emission des Methanols (2) in eine Reinigungsanordnung (5) zur Verringerung der Emission im Atmungsabgas (4) abgegeben wird, wobei in der Reinigungsanordnung (5) das Atmungsabgas (4) einer Wasserwäsche zum Auswaschen der Emission unterzogen wird und wobei in der Reinigungsanordnung (5) eine Kühlung erfolgt, **dadurch gekennzeichnet, dass** das von dem Produkttank (3) aufgenommene Methanol (2) mit einem Schutzgas (10) beschleiert wird und dass das Atmungsabgas (4) das Schutzgas (10) umfasst.

2. Verfahren nach Anspruch 1, **dadurch gekennzeichnet, dass** das Schutzgas (10) Stickstoff (10a) umfasst.

3. Verfahren nach Anspruch 1, **dadurch gekennzeichnet, dass** das Schutzgas (10) zumindest teilweise bei einer Herstellung des Methanols (2) anfällt, vorzugsweise, dass das Schutzgas (10) zumindest teilweise bei einer Luftzerlegung (12) zum Gewinnen von Sauerstoff (12a) anfällt.

4. Verfahren nach Anspruch 1, **dadurch gekennzeichnet, dass** in der Reinigungsanordnung (5) eine, insbesondere der Wasserwäsche prozesstechnisch vorgelagerte, Kühlung des Atmungsabgases (4) erfolgt, vorzugsweise, dass das Atmungsabgas (4) in der Reinigungsanordnung (5) auf einen Temperaturbereich von 0° C bis 20° C, insbesondere von 5° C bis 10° C, weiter insbesondere auf eine Temperatur von im Wesentlichen 5°C oder 10° C, abgekühlt wird.

5. Verfahren nach einem der Ansprüche 1 bis 4, **dadurch gekennzeichnet, dass** das Atmungsabgas (4) prozesstechnisch der Wasserwäsche vorgelagert einer Kondensation zum partiellen Ausscheiden der Emission unterzogen wird.

6. Verfahren nach Anspruch 5, **dadurch gekennzeichnet, dass** die Reinigungsanordnung (5) eine Kondensationsstufe (13) für die Kondensation und eine der Kondensationsstufe (13) prozesstechnisch nachgelagerte Wasserwäschestufe (14) für die Wasserwäsche umfasst, wobei das Atmungsabgas (4) gasförmig und insbesondere gekühlt von der Kondensationsstufe (13) zu der Wasserwäschestufe (14) geführt wird, vorzugsweise, dass die Wasserwäschestufe (14) eine Kolonne (14a) zur Wasserwäsche aufweist, weiter insbesondere, dass die Wasserwäschestufe (16) mit einem im Wesentlichen konstanten Massestrom an Wasser beaufschlagt wird.

7. Verfahren nach Anspruch 6, **dadurch gekennzeichnet, dass** in der Wasserwäschestufe (14) anfallendes Abwasser (7) einer Destillationsstufe (35) zum Entgasen und/oder Entwässern zugeführt wird.

8. Verfahren nach Anspruch 6 oder 7, **dadurch gekennzeichnet, dass** die Kondensationsstufe (13) eine Kühlvorrichtung (15), insbesondere einen Wärmetauscher (15a), zum Kühlen des Atmungsabgases (4) aufweist, sodass die Emission teilweise, vorzugsweise zu mindestens 80 %, in der Kondensationsstufe (13) zu einem Produktkondensat (9) kondensiert wird, vorzugsweise, wobei das Produktkondensat (9) in einen Kondensattank (20) geführt wird.

9. Verfahren nach einem der Ansprüche 1 bis 8, **dadurch gekennzeichnet, dass** die Kühlung durch Zufuhr eines Kühlmediums erfolgt, wobei das Kühlmedium durch eine bei einer Luftzerlegung (12) zum Gewinnen von Sauerstoff anfallende Kühlleistung gekühlt wird.

10. Verfahren nach einem der Ansprüche 1 bis 9, **dadurch gekennzeichnet, dass** in einer Anlage (1) zur Herstellung von Methanol (2) das Methanol (2) aus einem Rohstoff (21) hergestellt wird, welcher Rohstoff (21) Erdgas (22a) und/oder Rohöl (22b) umfasst, dass zur Herstellung von Methanol (2) als Zwischenprodukt ein Synthesegas (23) aus dem Rohstoff (22) erzeugt wird und dass das Synthesegas (23) katalytisch in das Methanol (2) umgewandelt wird, vorzugsweise, dass der durch die Luftzerlegung (12) gewonnene Sauerstoff zum Erzeugen des Synthesegases (23) verwendet wird.

11. Verfahren nach Anspruch 10, **dadurch gekennzeichnet, dass** die Anlage (1) einen Autothermreformer (24) zum Erzeugen des Synthesegases (23) umfasst, dem ein mit Prozesskondensat und Dampf gesättigtes und aus dem Erdgas (22a) erzeugtes Prozessgas (25) zugeführt wird und dass in dem Autothermreformer (24) unter Zusatz von in einer Luftzerlegung (12) gewonnenem und vorgeheiztem Sauerstoff (12a) das Synthesegas (23) erzeugt wird, vorzugsweise, dass die Anlage (1) einen Prereformer (28a) und einen dem Prereformer (28a) prozesstechnisch nachgeschalteten Steamreformer (28b) in einer Abzweigung aufweist, dass der Prereformer (28a) aus abgezweigtem Prozessgas (25) ein Spaltgas erzeugt, dass der Steamreformer (28b) das Spaltgas in ein weiteres Synthesegas (29) umwandelt und dass das weitere Synthesegas (29) dem Autothermreformer (24) zugeführt wird.

12. Verfahren nach Anspruch 11, **dadurch gekennzeichnet, dass** die Umwandlung des Synthesegases (21) in Methanol (2) die Umwandlung in ein Rohmethanol (2b) umfasst, vorzugsweise, welches Rohmethanol (2b) zum Gewinnen des Methanols (2) der Destillationsstufe (35) zum Entgasen und/oder Entwässern zugeführt wird.

13. Verfahren nach einem der Ansprüche 10 bis 12, **dadurch gekennzeichnet, dass** die Anlage (1) zur Herstellung des Methanols (2) eine Zwischenstufe einer Anlage (1a) zur Herstellung eines wasserhaltigen Kohlenwasserstoffgemisches (41) ist, dass das hergestellte Methanol (2) katalytisch in ein Dimethylether/Methanol/Wasser-Gemisch (42) umgewandelt wird und das Dimethylether/Methanol/Wasser-Gemisch (42) in mindestens einem adiabatisch arbeitenden Reaktor (43) in das wasserhaltige Kohlenwasserstoffgemisch (41) umgewandelt wird.

14. Tankanordnung für Methanol (2), mit einem Produkttank (3) zur Aufnahme des Methanols (2), einer Reinigungsanordnung (5) und einer Abgabeleitung zur Abgabe eines Atmungsabgases (4) von dem Produkttank (3) an die Reinigungsanordnung (5), wobei das Atmungsabgas (4) eine gasförmige Emission des Methanols (2) umfasst, wobei die Reinigungsanordnung (5) eine Wasserwäschestufe (14) zum Auswaschen der Emission aus dem Atmungsabgas (4) aufweist und wobei die Reinigungsanordnung (5) eine Kühlvorrichtung (15) zum Kühlen des Atmungsabgases (4) aufweist, **dadurch gekennzeichnet, dass** die Tankanordnung eine Beschleierungsvorrichtung (11) zur Beschleierung von von dem Produkttank (3) aufgenommenen Methanol (2) mit einem Schutzgas (10) umfasst und dass das Atmungsabgas (4) das Schutzgas (10) umfasst.

15. Tankanordnung nach Anspruch 14, **dadurch gekennzeichnet, dass** die Reinigungsanordnung (5) eine der Wasserwäschestufe (14) prozesstechnisch vorgelagerte Kondensationsstufe (13) zum partiellen Ausscheiden der Emission aufweist, vorzugsweise, dass die Kondensationsstufe (13) die Kühlvorrichtung (15) zum Kühlen des Atmungsabgases (4) und insbesondere eine Wasserwäschezuleitung zur gasförmigen und gekühlten Zuleitung des Atmungsabgases (4) von der Kondensationsstufe (13) zu der Wasserwäschestufe (14) aufweist.

## Claims

1. A method for reducing the emission of methanol (2), wherein the methanol (2) is accommodated by a product tank (3), wherein an evaporation waste gas (4) with a gaseous emission of the methanol (2) is discharged from the product tank (3) into a purifying assembly (5) for reducing the emission in the evaporation waste gas (4), wherein the evaporation waste gas (4) is subjected in the purifying assembly (5) to a water scrubbing process for washing out the emission, and wherein cooling takes place in the purifying assembly (5), **characterized in that** the methanol (2) accommodated in the product tank (3) is blanketed with a protective gas (10), and that the evaporation waste gas (4) includes the protective gas (10).

2. The method according to claim 1, **characterized in that** the protective gas (10) includes nitrogen (10a).

3. The method according to claim 1, **characterized in that** the protective gas (10) is at least in part produced during a production of the methanol (2), preferably, that the protective gas (10) is produced at least in part in an air separation process (12) for producing oxygen (12a).

4. The method according to claim 1, **characterized in that** the evaporation waste gas (4) is cooled in the purifying assembly (5), particularly upstream of the water scrubbing process with respect to the process, preferably, that the evaporation waste gas (4) is cooled down in the purifying assembly (5) to a temperature range of 0°C to 20°C, in particular of 5°C to 10°C, more particularly to a temperature of substantially 5°C or 10°C.

5. The method according to any one of the claims 1 to 4, **characterized in that**, with respect to the process, the evaporation waste gas (4) is subjected, upstream of the water scrubbing process, to a condensation process for partially separating the emission.

6. The method according to claim 5, **characterized in that** the purifying assembly (5) comprises a condensation stage (13) for condensation and a water scrubbing stage (14) for water scrubbing downstream of the condensation stage (13) with respect to the process, wherein the evaporation waste gas (4) is conducted from the condensation stage (13) to the water scrubbing stage (14) in a gaseous and, in particular, cooled state, preferably, that the water scrubbing stage (14) has a column (14a) for water scrubbing, more particularly, that a substantially constant mass flow of water is supplied to the water scrubbing stage (16).

7. The method according to claim 6, **characterized in that** waste water (7) produced in the water scrubbing stage (14) is fed to a distillation stage (35) for degassing and/or dewatering.

8. The method according to claim 6 or 7, **characterized in that** the condensation stage (13) has a cooling device (15), particularly a heat exchanger (15a), for cooling the evaporation waste gas (4), so that a part, preferably 80%, of the emission is condensed into a product condensate (9) in the condensation stage (13), preferably, wherein the product condensate (9) is fed into a condensate tank (20).

9. The method according to any one of the claims 1 to 8, **characterized in that** the cooling process is effected by supplying a cooling medium, wherein the cooling medium is cooled by a cooling power generated in an air separation process (12) for producing oxygen.

10. The method according to any one of the claims 1 to 9, **characterized in that** the methanol (2) is produced from a raw material (21) in a system (1) for producing methanol (2), which raw material (21) includes natural gas (22a) and/or crude oil (22b), that, in order to produce methanol (2), a synthesis gas (23) is produced as an intermediate product from the raw material (22), and that the synthesis gas (23) is catalytically converted into the methanol (2), preferably, that the oxygen obtained through the air separation process (12) is used for producing the synthesis gas (23).

11. The method according to claim 10, **characterized in that** the system (1) includes an autothermal reformer (24) for producing the synthesis gas (23), which is supplied with a process gas (25) saturated with process condensate and steam and produced from the natural gas (22a), and that the synthesis gas (23) is produced in the autothermal reformer (24) while adding oxygen (12a) that was obtained in an air separation process (12) and pre-heated, preferably, that the system (1) has a pre-reformer (28a) and a steam reformer (28b), which is downstream from the pre-reformer (28a) with respect to the process, in a branch, that the pre-reformer (28a) produces a cracked gas from branched-off process gas (25), that the steam reformer (28b) converts the cracked gas into a further synthesis gas (29), and that the further synthesis gas (29) is supplied to the autothermal reformer (24).

12. The method according to claim 11, **characterized in that** the conversion of the synthesis gas (21) into methanol (2) includes the conversion into a crude methanol (2b), preferably, which crude methanol (2b) is fed to the distillation stage (35) for degassing and/or dewatering for producing the methanol (2).

13. The method according to any one of the claims 10 to 12, **characterized in that** the system (1) for producing the methanol (2) is an intermediate stage of a system (1a) for producing a water-containing hydrocarbon mixture (41), that the produced methanol (2) is catalytically converted into a dimethyl ether/methanol/water-mixture (42) and the dimethyl ether/methanol/water-mixture (42) is converted into the water-containing hydrocarbon mixture (41) in at least one adiabatically operating reactor (43).

14. A tank assembly for methanol (2), comprising a product tank (3) for accommodating the methanol (2), a purifying assembly (5) and a discharge pipe for discharging an evaporation waste gas (4) from the product tank (3) to the purifying assembly (5), wherein the evaporation waste gas (4) includes a gaseous emission of the methanol (2), wherein the purifying assembly (5) includes a water scrubbing stage (14) for washing out the emission from the evaporation waste gas (4), and wherein the purifying assembly (5) includes a cooling device (15) for cooling the evaporation waste gas (4), **characterized in that** the tank assembly has a blanketing device (11) for blanketing methanol (2) accommodated by the product tank (3) with a protective gas (10), and that the evaporation waste gas (4) includes the protective gas (10).

15. The tank assembly according to claim 14, **characterized in that** the purifying assembly (5) includes a condensation stage (13), which is upstream of the water scrubbing stage (14) with respect to the process, for partially separating the emission, preferably, that the condensation stage (13) has the cooling device (15) for cooling the evaporation waste gas (4) and, in particular, a water scrubbing feed pipe for the gaseous and cooled feed of the evaporation waste gas (4) from the condensation stage (13) to the water scrubbing stage (14).

## Revendications

1. Procédé de réduction de l'émission de méthanol (2), dans lequel le méthanol (2) est reçu par un réservoir de produit (3), dans lequel un gaz d'échappement respiratoire (4) avec une émission gazeuse du méthanol (2) est fourni depuis le réservoir de produit (3) à un ensemble de nettoyage (5) pour réduire l'émission dans le gaz d'échappement respiratoire (4), dans lequel le gaz d'échappement respiratoire (4) est soumis, dans ledit ensemble de nettoyage (5), à un lavage à l'eau pour éliminer par lavage l'émission, et dans lequel un refroidissement est réalisé dans l'ensemble de nettoyage (5), **caractérisé par le fait que** le méthanol (2) reçu par le réservoir de produit (3) est voilé d'un gaz protecteur (10) et que le gaz d'échappement respiratoire (4) comprend le gaz protecteur (10).

2. Procédé selon la revendication 1, **caractérisé par le fait que** le gaz protecteur (10) comprend de l'azote (10a).

3. Procédé selon la revendication 1, **caractérisé par le fait que** le gaz protecteur (10) est produit au moins en partie lors d'une production du méthanol (2), de préférence que le gaz protecteur (10) est produit au moins en partie lors d'une décomposition d'air (12) pour obtenir de l'oxygène (12a).

4. Procédé selon la revendication 1, **caractérisé par le fait que** dans ledit ensemble de nettoyage (5) est réalisé un refroidissement du gaz d'échappement respiratoire (4), qui, quant au processus, a lieu en particulier en amont du lavage à l'eau, de préférence que le gaz d'échappement respiratoire (4) est refroidi dans l'ensemble de nettoyage (5) à une plage de température allant de 0 °C à 20 °C, en particulier de 5 °C à 10 °C, plus particulièrement à une température de 5 °C ou de 10 °C pour l'essentiel,

5. Procédé selon l'une quelconque des revendications 1 à 4, **caractérisé par le fait que** le gaz d'échappement respiratoire (4) est soumis à une condensation pour l'élimination partielle de l'émission, qui a lieu, quant au processus, en amont du lavage à l'eau.

6. Procédé selon la revendication 5, **caractérisé par le fait que** ledit ensemble de nettoyage (5) comprend un étage de condensation (13) pour la condensation et un étage de lavage à l'eau (14) pour le lavage à l'eau, qui est monté, quant au processus, en aval de l'étage de condensation (13), dans lequel le gaz d'échappement respiratoire (4) est mené de l'étage de condensation (13) à l'étage de lavage à l'eau (14) en étant gazeux et, en particulier, en étant refroidi, de préférence que l'étage de lavage à l'eau (14) comprend une colonne (14a) pour le lavage à l'eau, de plus en particulier que l'étage de lavage à l'eau (16) est alimenté en un débit massique d'eau pour l'essentiel constant.

7. Procédé selon la revendication 6, **caractérisé par le fait que** des eaux usées (7) produites à l'étage de lavage à l'eau (14) sont fournies à un étage de distillation (35) pour le dégazage et/ou la déshydratation.

8. Procédé selon la revendication 6 ou 7, **caractérisé par le fait que** l'étage de condensation (13) comprend un dispositif de refroidissement (15), en particulier un échangeur de chaleur (15a), destiné à refroidir le gaz d'échappement respiratoire (4) de sorte que l'émission est condensée en partie, de préférence à au moins 80 %, à l'étage de condensation (13) pour avoir un condensat de produit (9), de préférence dans lequel ledit condensat de produit (9) est mené dans un réservoir de condensat (20).

9. Procédé selon l'une quelconque des revendications 1 à 8, **caractérisé par le fait que** le refroidissement se fait en amenant un milieu de refroidissement, le milieu de refroidissement étant refroidi par une puissance frigorifique produite lors d'une décomposition d'air (12) pour obtenir de l'oxygène.

10. Procédé selon l'une quelconque des revendications 1 à 9, **caractérisé par le fait que** le méthanol (2) est produit, dans une installation (1) de production de méthanol (2), à partir d'une matière première (21), laquelle matière première (21) comprend du gaz naturel (22a) et/ou du pétrole brut (22b), que, pour la production de méthanol (2), un gaz de synthèse (23) est produit en tant que produit intermédiaire à partir de la matière première (22), et que le gaz de synthèse (23) est converti de manière catalytique en méthanol (2), de préférence que l'oxygène obtenu par la décomposition d'air (12) est utilisé pour produire le gaz de synthèse (23).

11. Procédé selon la revendication 10, **caractérisé par le fait que** l'installation (1) comprend un reformeur autothermique (24) pour produire le gaz de synthèse (23), auquel est amené un gaz de processus (25) saturé de condensat de processus et de vapeur et produit à partir du gaz naturel (22a), et que le gaz de synthèse (23) est produit dans le reformeur autothermique (24) tout en ajoutant de l'oxygène (12a) obtenu dans une décomposition d'air (12) et préchauffé, de préférence que l'installation (1) comprend un pré-reformeur (28a) et un reformeur à la vapeur (28b) qui, quant au processus, est monté en aval du pré-reformeur (28a) dans un branchement, que le pré-reformeur (28a) produit un gaz de craquage à partir de gaz de processus (25) dérivé, que le reformeur à la vapeur (28b) convertit le gaz de craquage en un autre gaz de synthèse (29) et que ledit autre gaz de synthèse (29) est amené au reformeur autothermique (24).

12. Procédé selon la revendication 11, **caractérisé par le fait que** la conversion du gaz de synthèse (21) en méthanol (2) comprend la conversion en un méthanol brut (2b), de préférence lequel méthanol brut (2b) est amené à l'étage de distillation (35) pour le dégazage et/ou la déshydratation, pour obtenir le méthanol (2).

13. Procédé selon l'une quelconque des revendications 10 à 12, **caractérisé par le fait que** l'installation (1) de production du méthanol (2) est un étage intermédiaire d'une installation (la) de production d'un mélange d'hydrocarbures hydratés (41), que le méthanol (2) produit est converti de façon catalytique en un mélange de diméthyléther, de méthanol et d'eau (42) et le mélange de diméthyléther, de méthanol et d'eau (42) est converti en ledit mélange d'hydrocarbures hydratés (41) dans au moins un réacteur (43) travaillant de manière adiabatique (43).

14. Ensemble de réservoir pour du méthanol (2), comprenant un réservoir de produit (3) destiné à recevoir le méthanol (2), un ensemble de nettoyage (5) et une conduite de distribution destinée à fournir un gaz d'échappement respiratoire (4) depuis ledit réservoir de produit (3) à l'ensemble de nettoyage (5), dans lequel le gaz d'échappement respiratoire (4) comprend une émission gazeuse du méthanol (2), dans lequel ledit ensemble de nettoyage (5) comprend un étage de lavage à l'eau (14) pour éliminer par lavage l'émission du gaz d'échappement respiratoire (4), et dans lequel l'ensemble de nettoyage (5) comprend un dispositif de refroidissement (15) destiné à refroidir le gaz d'échappement respiratoire (4), **caractérisé par le fait que** ledit ensemble de réservoir comprend un dispositif de voilage (11) destiné à voiler, d'un gaz protecteur (10), du méthanol (2) reçu par le réservoir de produit (3), et que le gaz d'échappement respiratoire (4) comprend le gaz protecteur (10).

15. Ensemble de réservoir selon la revendication 14, **caractérisé par le fait que** ledit ensemble de nettoyage (5) comprend un étage de condensation (13) pour l'élimination partielle de l'émission, qui, quant au processus, est monté en amont de l'étage de lavage à l'eau (14), de préférence que l'étage de condensation (13) comprend le dispositif de refroidissement (15) destiné à refroidir le gaz d'échappement respiratoire (4) et en particulier une amenée de lavage à l'eau destinée à amener de façon gazeuse et refroidie le gaz d'échappement respiratoire (4) de l'étage de condensation (13) à l'étage de lavage à l'eau (14).
